# EUROPÄISCHE PATENTANMELDUNG

(11) **EP 1 832 337 A1**
(43) Veröffentlichungstag der Anmeldung: **12.09.2007**
(21) Anmeldenummer: 07004501.8
(22) Anmeldetag: 06.03.2007
(51) Int. Cl.: B01J 2/00, B01J 2/12, B01J 2/30

(54) **Verfahren zur Beschichtung von Pulvern**

(30) Priorität: 11.03.2006 DE 102006011309
(71) Anmelder: Forschungszentrum Karlsruhe GmbH, 76133 Karlsruhe (DE)
(72) Erfinder: Hanemann, Thomas, Dr., 76297 Stutensee (DE); Zeep, Berthold, 76229 Karlsruhe (DE)
(74) Vertreter: Rückert, Friedrich

(57) **Zusammenfassung**

Verfahren zur Beschichtung von keramischen oder metallischen Pulvern mit einem organischen Additiv, umfassend ein Einfüllen des Pulvers und des Additivs in eine Mischkammer, ein Rotieren der Mischkammer, wobei sich das Pulver und das Additiv homogen vermischen und das Additiv die Pulveroberfläche bedeckt sowie eine Entnahme des Pulvers mit einer Beschichtung aus dem Additiv aus der Mischkammer. Aufgabe ist es, dieses Verfahren so zu gestalten, dass es ohne Lösungsmittel auskommt und eine vollständige Umhüllung sicherstellt. Die Aufgabe wird dadurch gelöst, dass sich während des Rotierens mindestens ein Mahlkörper in der Mischkammer befindet sowie das Additiv bei der Entnahme zu über 90% in der Beschichtung integriert wird.

## Beschreibung

Die Erfindung betrifft ein Verfahren zur Beschichtung von keramischen oder metallischen Pulvern mit einem organischen Additiv gemäß des ersten Patentanspruchs. Die auf diese Weise beschichteten Pulver finden im Bereich der Binder-Füllstoff-Systeme, den so genannten Komposites oder Feedstocks u. a. zur Herstellung von keramischen bzw. metallischen Bauteilen Verwendung.

Partikel oder Pulver aus anorganischen Feststoffen lassen sich in organischen Bindern wie z.B. Wachse oder Thermoplaste dispergieren. Mit steigendem Feststoffgehalt im Binder nimmt jedoch die Viskosität des Komposits naturgemäß zu. Ab einem Feststoffgehalt von ca. 40 bis 70 Vol.% wird in Abhängigkeit von der Füllstoffart, der mittleren Partikelgröße, der Partikelgrö-ßenverteilung sowie der spezifischen Partikeloberfläche ein kritischer Pulverfüllgrad erreicht, bei dem der Komposit keine homogenen Eigenschaften mehr aufweist und nicht mehr fließfähig ist. Dabei ist bekannt, dass Fließhilfsmittel (Dispergatoren) unterschiedlicher chemischer Zusammensetzung die Fließeigenschaften eines Komposit durch Viskositätsabsenkung signifikant verbessern können. Dieser Effekt wird dadurch erzielt, dass das anorganische Pulver vor der Vermischung eines Füllstoffs mit einem Binder zu einem Komposit mit diesem Fließhilfsmittel beschichtet wird.
**[1]** offenbart ein Beschichtungsverfahren für Partikel bei Verwendung eines Labormischers. Der Dispergator wird in einem Lösungsmittel gelöst und in einen Labormischer gesprüht, welcher das zu beschichtende Pulver enthält. Dispergator und Pulver werden mechanisch mit einem motorisch angetriebenen rotierenden Mischwerkzeug zu einem homogenen Gemisch vermischt. Das Lösungsmittel wird im Anschluss daran entfernt.
**[2]** offenbart ein Verfahren sowie eine Anlage zum Sprühtrocknen von unterschiedlichen Materialien. Der Dispergator wird in einem Lösungsmittel gelöst, anschließend wird das zu beschichtende Pulver in dem Lösungsmittel dispergiert. Um eine niedrige Viskosität der Mischung zu erzielen, sind relativ große Mengen Lösungsmittel notwendig. Die Mischung wird erwärmt und anschließend durch eine feine Düse gesprüht. Das Lösungsmittel verdampft und wird über das Trägergas entfernt. Das beschichtete Pulver kann am Boden des Sprühtrockners aufgefangen werden.

Ein ähnliches Verfahren wird auch in **[3]** beschrieben, wo u. a. eine zu zerstäubende Flüssigkeit einen dispergierten Feststoff enthält, mit dem Ziel, den Feststoffpartikeln nach der Trocknung adhesive Eigenschaften zu verleihen.

Ferner werden u. A. in **[4]** und **[5]** verschiedene nasschemische Verfahren für eine Umhüllung von anorganischen Partikel erwähnt und ein Verfahren speziell für Teilchengrößen kleiner 100 nm und ohne oder eine nur geringe unerwünschte Agglomeratbildung ausführlich beschreiben.

Zur Herstellung kleiner Mengen ist eine Beschichtung mit Hilfe eines Rotationsverdampfers möglich. Der meist wachsartige Dispergator wird dabei ebenfalls in einem Lösungsmittel, z.B. Ethanol, gelöst, anschließend wird das Pulver im Lösungsmittel dispergiert. Das Volumenverhältnis von Pulver zu Lösungsmittel wird in der Lösung ungefähr gleichhoch eingestellt. Die Lösung wird in einen Pulverkolben gefüllt und dieser an einem Rotationsverdampfer befestigt. Der Kolben wird in Rotation versetzt, die Mischung über einen längeren Zeitraum (1-3 Stunden) in Bewegung gehalten. Anschließend wird das Lösungsmittel durch Anlegen eines Unterdrucks im Verdampfer bei gleichzeitigem Erwärmen des Kolbens entfernt. Nach Beendigung des Lösungsmittelsverdampfens (zeitlicher Aufwand 1-2 h, je nach Lösungsmittelmenge) kann das beschichtete Pulver aus dem Kolben entnommen werden, das Pulver muss zwecks besserer Homogenisierung anschließend noch gesiebt werden und zur kompletten Lösungsmittelentfernung noch getrocknet werden (zeitlicher Aufwand für 300 g Pulver: ca. 12 h).

In **[6]** wird ferner ein kontinuierlich betriebenes Wirbelschichtverfahren zur Beschichtung von körnigen und pulverförmigen Materialien beschrieben, das in Ausführungsformen auch ohne ein Lösungsmittel auskommt. Ein Dispergator wird dabei entweder in einem Lösungsmittel gelöst oder als Schmelze, d.h. ohne Lösungsmittel) oder als Suspension in einen Wirbelschichtreaktor auf das zu beschichtende Pulver (Material) gesprüht. Durch eine mit dem von unten durch das Pulver durchströmende Prozessluft eingeleitete Wärmeenergie erfolgt eine Trocknung oder für den Fall, dass keine flüchtigen Stoffe vorhanden sind, eine Verfestigung der sich bildenden Beschichtungen auf den Materialteilchen, wobei diese allerdings nicht vollständig umhüllt werden.

Davon ausgehen liegt die **Aufgabe der Erfindung** darin, ein Verfahren zur Beschichtung von keramischen oder metallischen Pulvern mit einem organischen Additiv vorzuschlagen, das ohne Lösungsmittel auskommt und eine vollständige Umhüllung sicherstellt.

Die Aufgabe wird durch ein Beschichtungsverfahren gemäß des ersten Patentanspruchs gelöst, wobei die auf diesen rückbezogenen Unteransprüche vorteilhafte Ausgestaltungen wiedergeben.

Die Erfindung beschreibt ein Verfahren zur Beschichtung von keramischen oder metallischen Pulvern, bei dem der Dispergator ohne Lösungsmittel (organisches Additiv) auf die Partikel aufgebracht wird. Das zu beschichtende Keramikpulver gemeinsam mit einer entsprechenden Menge eines bei Raumtemperatur flüssigen, niedrig viskosen Dispergators in eine chemisch passiv verhaltende Mischkammer, wie z.B. einen Glaskolben eingefüllt und durch eine langsame Rotation der Mischkammer miteinander vermischt. Die entsprechend erforderliche Menge an organischem Additiv als Dispergator bestimmt sich aus der spezifischen Oberfläche des zu beschichtenden Pulvers, d.h. von der Partikelgröße, -form und -rauhigkeit einerseits und der Menge an Pulver andererseits. Die Quantifizierung erfolgt über die Menge des Pulvers und der spezifischen Oberfläche des Pulvers. Falls die molekulare Struktur des Dispergators bekannt ist, lässt sich die molekulare Oberfläche berechnen und über die Avogadrozahl die entsprechende Oberfläche pro Gramm Dispergator ermitteln. Um auf der sicheren Seite zu sein und eine möglichst gute Oberflächenbelegung zu erzielen, wird der vorher berechnete Wert meistens verdoppelt.

Die vorgenannte Menge ist so bemessen, dass sich mindestens 90%, vorzugsweise 95% weiter bevorzugt 98% des Dispergators nach Abschluss des Verfahrens in der Beschichtung der Pulver wieder findet. Auf diese Weise reduziert sich der bei der Entnahme des beschichteten Pulvers nicht in der Beschichtung gebundene Restanteil an Additiv (loser Dispergator) auf 10% bzw. 5% bzw. 2% der ursprünglich eingegebenen Menge. Er ist in vorteilhafter Weise so gering, dass er je nach Einsatzzweck tolerierbar ist und nicht mehr aufwendig von dem beschichteten Pulver getrennt werden muss.

Wesentliche Verfahrensschritte der Erfindung umfassen die zusätzliche Eingabe von mindestens einem losen Mahlkörper (Mahlkugeln) in die Mischkammer sowie die gemeinsames Umwälzen der Mischung mit den Mahlkugeln während der Rotation der Mischkammer. Diese Mahlkugeln, die sich in der Konsistenz und vorzugsweise auch in der Dichte von der Mischung unterscheiden, bewirken nicht nur eine zusätzliche Beschleunigung und Verbesserung des Mischvorgangs, sondern dienen in Vorteilhafterweise auch der Zerkleinerung von Agglomeraten und Klumpen aus Partikeln. Wesentlich dabei ist jedoch, dass der Dispergator durch die verstärkte Umwälzung der Mischung in kürzerer Zeit die gesamte Oberfläche der zu beschichtenden Partikel erreicht und diese dabei auch benetzt oder beschichtet. Dabei fördern die Mahlkugeln ein zusätzliches Aneinanderpressen von Dispergator und Partikeloberfläche insbesondere im Pressungsbereich zwischen Mahlkugeln und/oder Mischkammerwandung und vermindern damit die Gefahr eines wieder Ablösens des Dispergators von den Partikeloberflächen. Dies macht in vorteilhafter Weise andere Maßnahmen, wie z.B. die Verwendung von lösungmittelhaltigen Dispergatoren oder ein Aufschmelzen des Dispergators für eine homogene Vermischung bereits vom Ansatz her überflüssig.

Ein möglicher Abrieb der Mahlkugeln mischt sich zwangsläufig in die Mischung zwischen Dispergator und Partikel ein. In einer weiteren bevorzugten Ausführungsform weisen die Mahlkugeln gegenüber der Mischkammerwandung, den Partikeln und dem Dispergator abrasiv beständige Oberfläche auf, ohne jedoch selbst verschleißend auf die vorgenannten Komponenten zu wirken. Grundvoraussetzung ist hierfür eine möglichst geringe Festkörperreibung bei geringem Abrieb an allen beteiligten Reibungspartnern, wobei sie durch ein Gleitmittel (ggf. im Dispergator) grundsätzlich verbesserbar ist. Vorzugsweise besteht die Mahlkugeloberfläche aus einem sehr verschleißbeständigen Material, wie z.B. eine Schneidkeramik, einem Hartmetall oder einem Hartstoff (als Mahlkugelbeschichtung oder als Mahlkugelmaterial).

Die Anzahl der Mahlkugeln wird in Abhängigkeit zu der Pulvermenge bestimmt. Empirisch ermittelt gilt der Zusammenhang, dass z.B. auf 300 g Pulver 90 g Mahlkugeln zu verwenden sind. Bei größeren Pulvermengen ist entsprechend hochzurechnen.

Der mit der pulverförmigen Mischung gefüllte bevorzugte Glaskolben wird partiell in ein Wasserbad eingetaucht und dort unter Verwendung eines Rotationsverdampfers in langsame Rotation versetzt. Die Mahlkugeln bewirken, dass die anfängliche inhomogene Dispergatorverteilung verschwindet und die Pulverpartikel homogen beschichtet werden. Nach einer Beschichtungszeit beispielsweise von 3h kann der Glaskolben entnommen werden, das beschichtete Pulver kann direkt nach dem Abtrennen der Mahlkugeln zu Herstellung von Kompositen oder Feedstocksystemen verwendet werden.

Das mit der Erfindung mit einem Additiv beschichtete keramische oder metallische Pulver findet seine bevorzugte Verwendung als Material für Replikationsverfahren wie beispielsweise keramischen Spritzguss oder Reaktionsgießen. Folglich sind auch die hierfür erforderlichen zusätzlichen Verfahrensschritte mit dem Verfahren gemäß des ersten Patentanspruchs kombiniert und aneinander angepasst werden. Diese umfassen im Wesentlichen
- ein Umfüllen (Entnahme und Einfüllen) des Pulvers mit einer Beschichtung aus dem Additiv von der Mischkammer in eine Spritzgussmaschine, vorzugsweise direkt in einen Schneckenextruder oder eine andere temperierbare Fördereinrichtung, wobei ein Bindemittel und optional zusätzliche Stoffe oder Hilfsmittel in das Pulver eingemischt werden können,
- ein Aufheizen einer Mischung, bestehend aus Pulver, Bindemittel und optionalen Stoffen und Hilfsmitteln auf eine Temperatur oberhalb der Erweichungstemperatur des Bindemittels, sowie
- ein Einspritzen der Mischung durch den Schneckenextruder oder eine andere Fördereinrichtung in die vorzugsweise evakuierten und vorzugsweise temperierte Spritzgussformen.
Insbesondere das Umfüllen weist im Rahmen der Erfindung gegenüber herkömmlichen (z.B. die vorgenannten) Beschichtungstechnologien den Vorteil auf, dass bei der Beschichtung nur eine sehr geringe Menge an Reststoffen (Lösungsmittel, nicht gebundener Dispergator etc.) übrig bleibt, die für eine Weiterverarbeitung mit den vorgenanten Schritten tolerierbar sind, d.h. beim Umfüllen nicht abgesondert (z.B. thermisch, chemisch, mechanisch oder strömungstechnisch) werden müssen. Weitere aus der Spritzgusstechnik allgemein bekannte Verfahrensschritte sind möglich.

Durch ein beschichtetes Materialpulver gemäß der Erfindung erzielt man im Vergleich zu einem herkömmlichen Pulver Vorteile: Zum einen erhält man durch die grundsätzlich geringere Reibung der Beschichtungsflächen aneinander insbesondere auch bei höheren Pulveranteil im Bereich zwischen 60 und 80 % in einer zu verarbeitenden Masse aus Pulver und Bindemittel (vorgenannte Mischung) eine geringe Reibung zwischen den Partikeln und damit insgesamt eine für einen Replikationsprozess mit Formen vorteilhafte geringere Viskosität der Masse. Andererseits wird durch die geringere Reibung Abrasion an den Werkzeugen durch die Partikel signifikant reduziert und damit die Standzeiten der Formgebungs- und Forderkomponenten erhöht.

### Ausführungsbeispiel 1:

300g getrocknetes Aluminiumoxid Typ CT3000SG (Fa. Almatis, mittlere Partikelgröße 0.80 µm, spezifische Oberfläche 7,5 m²/g) wird in einen Pulverkolben (Glaskolben, Volumen 2 I) gefüllt und mit 2 g eines flüssigen Dispergators (Typ Brij92, Polyethylenglykololeylether, Fa. Sigma-Aldrich) versetzt. Die Dispergatortropfen bilden dabei mit kleinen Mengen des Pulvers bevorzugt einen ortsfesten Klumpen, während der Großteil des Pulvers unbenetzt verbleibt. Anschließend werden 90g Mahlkugeln (45 Stück, Durchmesser ca. 10 mm, Zirkondioxid) zugefügt und der Kolben teilweise in einem Wasserbad (Wassertemperatur 80°C) eingetaucht in Rotation versetzt (100 Umdrehungen/min, 180 min Dauer). Nach Beendigung der Rotation, d.h. des Beschichtungsprozesses der Partikel mit dem Dispergator und nach Abtrennen der Mahlkugeln können die beschichteten Partikel aus dem Kolben entnommen werden. Zur Überprüfung der Beschichtung werden 60g des beschichteten Pulvers in einem polymerbasierten Reaktionsharz bei Raumtemperatur dispergiert und die Viskosität des bei Raumtemperatur gut fließfähigen Komposits mittels eines Rotationsrheometers (Kegel-Platte-System, Fa. Bohlin, Typ CVO 50) bestimmt. Außerdem lässt sich die Qualität der Beschichtung stichprobenartig mikroskopisch verifizieren. Als Referenz dient eine Partikelfraktion des gleichen Ausgangspulvers, die identisch, jedoch ohne eine Dispergatorzugabe prozessiert wurde. Die Viskosität des Komposits ist bei den gewählten Versuchsbedingungen reproduzierbar im Bereich bis 20 % niedriger als die Viskosität des Referenzsystems. Da die Partikelgeometrie durch die Beschichtung - sie vergrößert die Partikel um maximal 2% - praktisch unverändert bleibt, sind die ermittelten Änderungen der Viskosität allein auf die Beschichtung zurückzuführen.

### Weitere Ausführungsbeispiele:

Mit gleichen Versuchsdurchführungen (Vorgehensweise und Vorrichtungen) und Versuchsparametern wie im Ausführungsbeispiel 1 genannt wurden auch die in **Tab.1** dargestellten weiteren Materialpaarungen bearbeitet.

**Tab.1:**

| **Pulver** | **Typ** | **Dispergator** |
|---|---|---|
| Aluminiumoxid | CT3000SG, Fa. Almatis | Acetyltriethylcitrat (ATBC), Fa. Morflex |
| Zirkondioxid | TZ 3YS-E, Fa. Tosoh | Polyethylenglykololeylether (Brij92), Fa. Sigma-Aldrich |
| Zirkondioxid | TZ 3YS-E, Fa. Tosoh | Acetyltriethylcitrat (ATBC), Fa. Morflex |

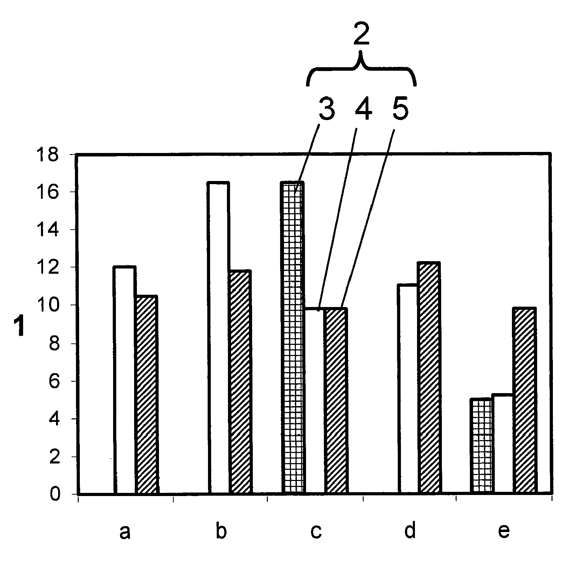

**Fig.1** gibt die im vorgenannten Rotationsrheometer ermittelten Viskositäten (relative Viskosität **1** bei einer Scherrate 100 l/s) von Reaktionsgussmassen beispielhaft mit dem in **Tab.1** genannten Zirkondioxid (70 Gew.% Pulveranteil, 30 Gew.% organischer Bindemittelanteil) als Feststoff wieder. Das Zirkondioxidpulver TZ 3YS-E ist für jede der Balkengruppen **2** unterschiedlich vorbehandelt oder beschichtet, weist aber eine einheitliche mittlere Partikelgröße von 0.63 µm sowie eine spezifische Oberfläche 7,0 m²/g auf. Die in **Fig.1** dargestellten Balkengruppen geben in ihrer Höhe die relativen Viskositäten für ein von Tosoh angeliefertes, d.h. unbeschichtetes ZrO₂ **(a),** für ein separat, aber identisch prozessiertes ZrO₂-Pulver (Referenzpulver ohne Dispergator) gleicher Partikelgröße und Zusammensetzung **(b),** für ein mit Polyethylenglykololeylether (Brij92) gemäß der Erfindung beschichtetes Tosoh-ZrO₂-Pulver **(c),** für ein über ein Lösungsmittelbeschichtungsverfahren gemäß dem Stand der Technik mit Polyethylenglykololeylether (Brij72) beschichtetes Tosoh-ZrO₂ **(d)** sowie ein mit Acetyltriethylcitrat (ATBC) beschichtetes Tosoh-ZrO₂ **(e)** wieder, und zwar jeweils mit einem Balken für Messungen bei 20°C **(3),** 40°C **(4)** und 60°C **(5).** Ist für eine Temperatur kein Balken dargestellt, was die Formmasse mit den gewählten apparativen Möglichkeiten wegen zu hoher Viskosität nicht messbar (bei Balkengruppen **a, b und d).** Viskosität bei 20°C liegt also nur bei dem gemäß dem beanspruchten Verfahren überhaupt in einem messbaren Bereich, d.h. die Viskosität unterschreitet eine kritische Grenze (vgl. Balkengruppen **c und e).** Bei 40°C und 60°C ist jede Zusammensetzung in ihrer Viskosität messbar, wobei sich die Viskositäten mit Pulvern, die mit dem beanspruchten Verfahren vorbehandelt sind gegenüber dem unbehandelten Pulvern (vgl. Balken **a und b)** um mindestens 20 bzw. 10 % und gegenüber dem mit einem Lösungsmittelverfahren beschichteten Pulver (vgl. Balken **d)** um mindestens 10 bzw. 20 % unter den gewählten Bedingungen reduzieren.

Auch andere Versuchsergebnisse mit anderen Materialpaarungen und anderen Scherraten weisen auf eine besonders signifikante Viskositätsabsenkung bei niedrigen Temperaturwerten (20°C) um bis zu 80% von mit dem beanspruchten Verfahren beschichteter Pulver gegenüber nicht beschichteten Ausgangspulvern. Zudem sinkt mit der Beschichtung grundsätzlich die Temperaturabhängigkeit der Viskosität der Spritzgussmassen, was während eines Spritzvorgangs in vorteilhafter Weise eine verbesserte Reproduzierbarkeit des Materialtransports in die Spritzgussformen auch bei nicht exakter Temperaturführung unterstützt und gewährleistet.

### Literatur:

[1] http://www.loedige.de/de/index.php?a=1074, Stand: 07.02.1006
[2] http://www.niroinc.com/html/pharma/precisioncoating.html Stand: 08.02.2006
[3] DE 699 11 265 T2
[4] DE 101 31 173 C2
[5] DE 101 64 768 A1
[6] DE 101 30 334 A1

### Bezugszeichenliste

- 1: relative Viskosität
- 2: Balkengruppe
- 3: Balken für Messungen bei 20°C
- 4: Balken für Messungen bei 40°C
- 5: Balken für Messungen bei 60°C

- a: Balkengruppe für ein von Tosoh angeliefertes, d.h. unbeschichtetes ZrO₂-Pulver
- b: Balkengruppe alternatives ZrO₂-Pulver
- c: Balkengruppe für ein mit Polyethylenglykololeylether (Brij92) gemäß der Erfindung beschichtetes Tosoh-ZrO₂-Pulver
- d: Balkengruppe für ein über ein Lösungsmittelbeschichtungsverfahren gemäß dem Stand der Technik mit Polyethylenglykololeylether (Brij72) beschichtetes Tosoh-ZrO₂
- e: Balkengruppe für ein mit Acetyltriethylcitrat (ATBC) beschichtetes Tosoh-ZrO₂

## Patentansprüche

1. Verfahren zur Beschichtung von keramischen oder metallischen Pulvern mit einem organischen Additiv, umfassend die folgenden Verfahrensschritte:
a) Einfüllen des Pulvers und des Additivs in eine Mischkammer,
b) Rotieren der Mischkammer, wobei sich das Pulver und das Additiv homogen vermischen und das Additiv die Pulveroberfläche bedeckt sowie
c) Entnahme des Pulvers mit einer Beschichtung aus dem Additiv aus der Mischkammer,
wobei
d) sich während des Rotierens mindestens ein Mahlkörper in der Mischkammer befindet sowie
e) das Additiv bei der Entnahme zu über 90% in der Beschichtung integriert wird.

2. Verfahren nach Anspruch 1, wobei das organische Additiv lösungsmittelfrei ist.

3. Verfahren nach Anspruch 1 oder 2, wobei sich die Mahlkörper in ihrer Konsistenz und ihrer Dichte von der Mischung aus Pulver und Additiv unterscheiden.

4. Verfahren nach einem der Ansprüche 1 bis 3, wobei die Mahlkörper eine gegenüber den Partikeln und dem Dispergator abrasiv beständige Mahlkörperoberfläche aufweist.

5. Verfahren nach einem der vorgenannten Ansprüche, wobei die Mahlkörperoberfläche aus einer Schneidkeramik, einem Hartmetall oder einen Hartstoff besteht.

6. Verfahren nach einem der vorgenannten Ansprüche, wobei der Dispergator ein Gleitmittel enthält.

7. Verfahren nach einem der vorgenannten Ansprüche, wobei die Mischkammer ein Glaskolben ist, der beim Rotieren partiell in ein Wasserbad eingetaucht ist.
